# EUROPEAN PATENT APPLICATION

(11) **EP 0 563 433 A2**
(43) Date of publication of application: **06.10.1993**
(21) Application number: 92111635.6
(22) Date of filing: 09.07.1992
(51) Int. Cl.: G11B 15/675, G11B 33/14

(54) **Closure and positioning mechanism for streamer cartridges**

(30) Priority: 03.04.1992 US 863050
(71) Applicant: TANDBERG DATA A/S, 0808 Oslo 8 (NO)
(72) Inventor: Dilling, Jan-Erik, N-0588 Oslo (NO); Rudi, Guttorm, N-1472 Fjellhamar (NO); Teien, Nils Martin, N-0490 Oslo (NO); Auke, Bjorn, N-3472 Dalbo (NO)
(74) Representative: Goddar, Heinz J., Dr.

(57) **Abstract**

A locking and closure mechanism for a magnetic tape drive including a housing adapted to receive a cartridge containing a magnetic recording medium, a retaining and ejection arrangement associated with the housing. The retaining and ejection arrangement securely retains the cartridge within the housing, and is capable of selectively moving the cartridge to a predetermined position that allows removal of the cartridge from the housing. A detent mechanism is provided that maintains a cartridge in the predetermined position, and safely conducts static electricity from the cartridge. The detent arrangement is connected to the housing and to ground.

## Description

### TECHNICAL FIELD

The present invention relates to a closure and positioning mechanism for a tape cartridge of a magnetic tape drive (streamer).

### BACKGROUND OF THE INVENTION

Magnetic tape drives are generally known wherein data are recorded on a length of magnetic tape contained in a cartridge, and may be read therefrom. Such cartridges usually contain not only the magnetic tape, but a capstan idler and a cantered dust cover. The operator of the tape drive pushes the cartridge into an insertion channel in a transverse direction towards a magnetic head. Such drives usually include a mechanism for automatically opening the dust cover of the cartridge, thus permitting contact between the magnetic head and the magnetic tape. A tape capstan driven by a tape drive motor, and the magnetic head, are disposed at the rear of the insertion channel. The tape capstan pressed the magnetic tape against the capstan idler to drive the tape. The magnetic head contacts the magnetic tape to record or read the data.

The width of the magnetic tape drive is determined not only by the length of the cassette, but by the space required to house the mechanisms for retaining the tape within the drive, and for ejecting the tape from the drive. In known magnetic tape drives, the configuration and arrangement of the retaining and ejection mechanisms require a relatively large amount of space. This greatly increases the overall size of the drive, and the envelope required to mount the drive in a computer housing or other apparatus.

Furthermore, the environments in which magnetic tape cartridges are used, and the materials from which they are made, cause them to be subject to the undesirable accumulation of static electricity. In order to prevent the loss of data, some mechanism must be provided to safely discharge static electricity from the cartridge.

### SUMMARY OF THE INVENTION

It is therefore, an object of the invention to provide a locking and closure mechanism for magnetic tape drive that is relatively compact.

It is another object of the invention to provide a locking and closure mechanism for a magnetic tape drive that limits the outward travel of the cassette when it is ejected from the drive.

It is yet another object of the present invention to provide a locking and closure mechanism for a magnetic tape drive in which static electricity may be safely discharged from the magnetic tape cartridge.

These and other objects are achieved by providing, in a locking and closure mechanism for a magnetic tape drive including a housing adapted to receive a cartridge containing a magnetic recording medium, a retaining and ejection arrangement associated with the housing. The retaining and ejection arrangement securely retains the cartridge within the housing, and is capable of selectively moving the cartridge to a predetermined position that allows removal of the cartridge from the housing. A detent mechanism is provided that maintains a cartridge in the predetermined position, and safely conducts static electricity from the cartridge. The detent arrangement is connected to the housing and to ground.

In a preferred embodiment, the detent arrangement includes a metallic leaf spring having a first end secured to the housing, and a second end including a protrusion. The second end of the leaf spring is biased towards engagement with a notch in the cartridge when the cartridge is in its predetermined eject position.

The retaining and ejection arrangement includes a guide rail secured to the housing. A slide member is secured for reciprocal movement on the rail, and includes a contact surface that is adapted to engage the cartridge. A locking cam projection extends from the slide member. A resilient biasing member is provided to bias the slide member towards the cartridge. A locking arm is pivotably secured to the housing, and includes a first end having a cam surface and a locking surface capable of selective engagement with the locking cam projection on the slide member. The locking arm also includes a second end having an actuator contact surface. The locking arm is pivotable between a first, locking position and a second, release position. An over-center spring is connected to the locking arm to bias the locking arm into either the first position or the second position. A release mechanism is disposed on the housing, and is selectively actuable, through contact with the actuator intact surface of the locking arm, to overcome the bias of the over-center spring to pivot the locking arm to the release position.

The release mechanism can include a reciprocable release button that protrudes from the housing. An actuator linkage is pivotally mounted inside the housing, and includes a first abutment surface that is engageably with the release button, and a second abutment surface engageable with the contact surface of the locking arm. A biasing member can be provided to bias the actuator linkage into engagement with the release button.

The housing includes a cartridge access opening that is covered by a selectively pivotable door. A first arcuate cog surface is disposed on, and projects from, the door. A door linkage is pivotably connected to the housing, and includes a door lock stop and a second arcuate cog surface that is adapted to mesh with the cog surface on the door. A door lock toggle is pivotably connected to the housing. The door lock toggle is actuable to a locked position in which the door lock toggle engages the door stop on the door linkage to prevent opening of the door, and is also pivotable to an unlocked position in which the door is free to open. A door release member extends from the actuator linkage and actuates the door lock toggle to the unlocked position. A first spring is connected to the door linkage for basing the door towards the open position and basing the actuator linkage to a neutral position. The second spring is connected to the door lock toggle for basing the door lock toggle towards the door linkage.

The locking enclosure mechanism also includes a roller lever that is mounted on the housing. The roller lever is movable into contact with the bottom surface of the cartridge. A roller lever actuator extends from the locking arm, and is adapted in position to move the roller lever. In an illustrative embodiment, the roller lever is provided in the form of a generally Y-shaped lever including a pair of angularly offset arms. Each of the offset arms terminates in a respective free end upon which is mounted a roller member.

Other objects and advantages of the present invention will be apparent upon reference to the accompanying description when taken in conjunction with the following drawings.

### BRIEF DESCRIPTION OF THE DRAWINGS

FIG. 1 illustrates a top sectional view, partially broken away, of a magnetic tape drive embodying the principles of the present invention.

FIG. 2 is a sectional view, taken generally along lines II-II, of the embodiment shown in FIG. 1.

FIG. 3 illustrates a sectional view similar to that shown in FIG. 2, with the cartridge shown in its inserted position.

FIG. 4 illustrates a sectional view similar to that shown in FIG. 3, with the door in its closed position.

FIG. 5 is a sectional view taken generally along lines IV-IV of FIG. 1.

### DESCRIPTION OF THE PREFERRED EMBODIMENT

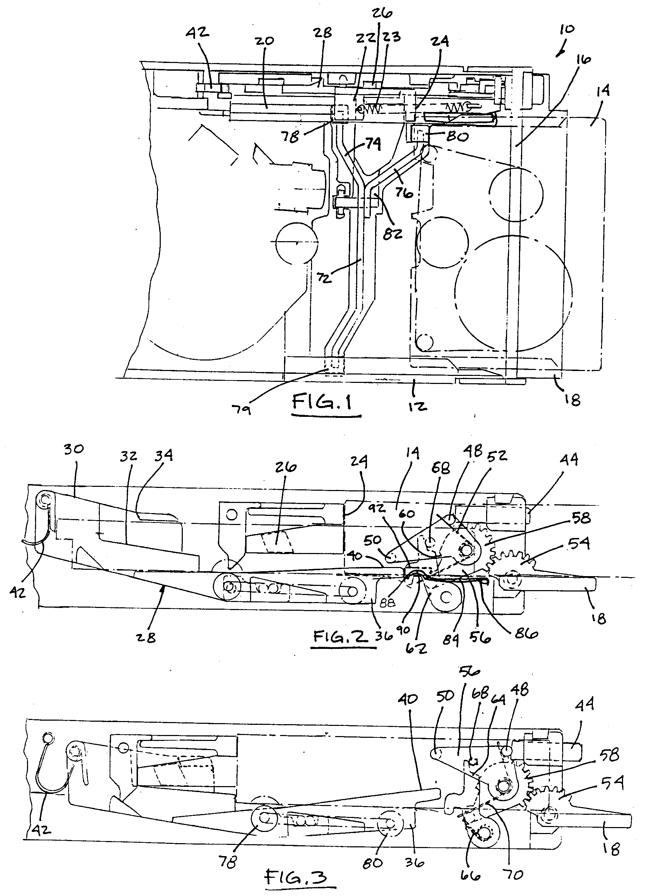

FIG. 1 illustrates a magnetic tape drive 10 embodying the principles of the present invention. The drive 10 includes a housing 12 that is adapted to receive a cartridge 14 through a cartridge access opening 16. The access opening 16 is selectively closed by a pivotable door 18.

The drive includes a locking and closure mechanism having a retaining and ejection arrangement for securely retaining the cartridge 14 within the housing 12, and for selectively moving the cartridge 14 to a predetermined position allowing removal the cartridge 14 from the housing 12. The retaining and ejection arrangement includes a guide rail 20, and a slide member 22 mounted for reciprocal movement along the guide rail 20. A slide eject spring 23 is connected between the slide member 22 and the housing 12. The slide member 22 includes a contact surface 24 adapted to engage the cartridge, and a locking cam projection 26.

As shown in FIG. 2, the retaining and ejection arrangement also includes a pivotable locking arm 28. The locking arm 28 includes a first end 30 having a cam surface 32 and a locking surface 34. The cam surface 32 and locking surface 34 are capable of selective' engagement with the locking cam projection 26 of the slide member 22, as will be described in detail hereinbelow. A second end 36 of the arm 28 includes an actuator contact surface 40. An over-center spring 42 is connected to the housing 12 and to the first end 30 of the locking arm 28. The over-center spring 42 positively biases the locking arm 28 between a first, locking position and a second, release position. The locking arm 28 is shown in its release position in FIG. 2.

The retaining and ejection arrangement also includes a release mechanism encompassing a release button 44 protruding from the housing 12. The release button 44 cooperates with an actuator linkage 46 that is pivotally mounted inside the housing 12. The actuator linkage 46 includes a first abutment surface 48 that is engageable with the release button, and a second abutment surface 50 that is engageable with the actuator contact surface 40 of the locking arm 28. A spring 52 biases the actuator linkage 46 into engagement with the release button 44.

The door 18 includes a first arcuate cog surface 54. A door linkage 56 is pivotally connected to the housing, and includes a second arcuate cog surface 58 that is adapted to mesh operatively with the first arcuate cog surface 54 on the door 18. The door linkage 56 also includes a door lock stop 60.

A door lock toggle 62 is pivotally connected to the housing 12. The door lock toggle 62 includes a door lock surface 64 that is selectively engageable with the door lock stop 60 on the door linkage 56. A spring 66 is provided to bias the door lock toggle 62 towards the door linkage 56. A door release extension 68 projects laterally from the door linkage 56 to actuate the door lock toggle 62. A second end 70 of the basing spring 52 presses against the door linkage 56 in a counter-clockwise direction, and acts through the cog surfaces 54, 58 to bias the door 18 to an opened position.

As best seen in FIG. 1, the locking and closure mechanism also includes a roller lever 72 disposed along a bottom surface of the housing 10. The roller lever 72 is generally Y-shaped, and includes a pair of angularly offset arms 74, 76. A pair of roller members 78, 80 are disposed on the respective free ends of the arms 74, 76. The roller members 78, 80 are movable into contact with the bottom surface of the cartridge 14 with a roller lever actuator mechanism 82 that extends laterally from the arm 28.

The present invention also includes a detent arrangement in the form of a leaf spring 84 that acts to retain the cartridge 14 in the position shown in FIGS. 1 and 2. The leaf spring 84 includes a first end 86 that is secured to the housing 12, and to ground. The leaf spring 84 also includes a second end 88 having a protrusion 90 that is biased towards engagement with a notch 92 formed in the underside of the cartridge 14.

Operation of the locking and closure mechanism will now be described with reference to FIGS. 2 through 5. FIG. 2 illustrates the cartridge 14 in a predetermined position in which the protrusion 90 of the leaf spring 84 is engaged in the notch 92 of the cartridge 14. Engagement of the protrusion 90 in the notch 14 prevents the slide member 22 from forcing the cartridge 14 totally out of the housing 12. In the position shown in FIG. 2, the cartridge 14 can be removed from the housing 12, or inserted into the housing 12, by an operator.

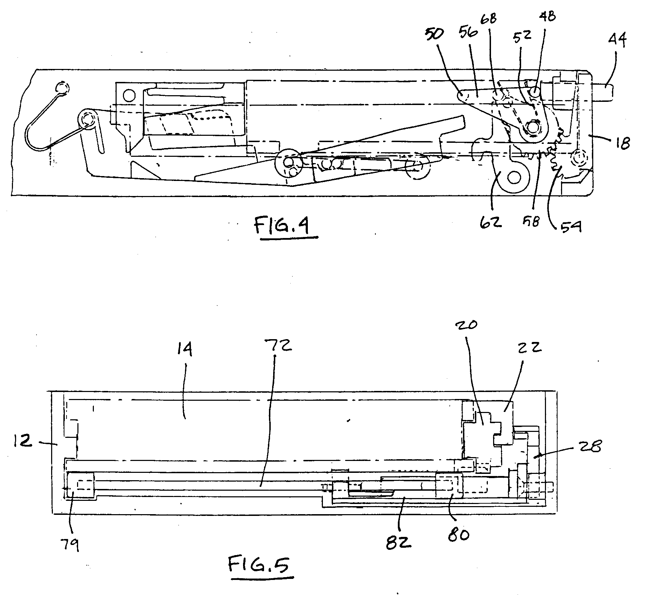

FIG. 3 illustrates the cartridge 14 in an inserted position. Upon insertion of the cartridge 14 into the housing 12, the locking cam projection 26 of the slide member 22 comes into contact with the cam surface 32 of the locking arm 28, and pivots the end 30 of the locking arm 28 downwardly. Such pivoting of the locking arm 28 causes the roller lever actuator 82 to raise the roller lever 72 to a position in which the rollers 78, 80 come into contact with the bottom surface of the cartridge 14. After a predetermined amount of movement, the over-center spring 42 biases the end 30 of the locking arm 28 into a downward or locked position, in which the locking cam projection 26 is retained behind the locking surface 34 of the arm 28. FIG. 5 is a sectional view showing the cartridge in its inserted position, with the rollers 78, 80 in contact with the bottom surface of the cartridge 14.

FIG. 4 illustrates the cartridge 14 in its inserted position, with the door 18 pivoted to its closed position. Pivoting of the door 18 upwardly to its closed position causes the cog surface 54 to interact with the cog surface 58 to pivot the door linkage 56 against the bias of the spring 52 in a clockwise direction, until the door lock stop 60 of the door linkage 56 engages the door lock surface 64 of the door lock toggle 62. In this position, the door 18 can only be opened by actuation of the release button 44.

When the release button 44 is pressed, the release button pushes the abutment surface 48 of the arm actuator linkage 46, and causes the door release extension 68 on the arm actuator linkage 46 to break the contact between the door lock surface 64 of the door lock toggle 62 and the door lock stop 60 of the door linkage 56, thus allowing the door 18 to pivot to its open position. Simultaneously, the second abutment surface 50 of the arm actuator linkage 46 acts against the actuator contact surface 40 of the arm 28 to pivot the second end 36 of the arm 28 downwardly. This downward pivoting releases the cam surface 32 of the slide member 22 from the locking surface 34 of the arm 28, and causes the roller lever actuator mechanism 82 to lower the roller 78, 80 of the roller lever 72 out of contact with the bottom surface of the cartridge 14. The slide member 22, under the force of the slide eject spring 23, then moves the cartridge 14 outwardly to its eject position, as shown in FIGS. 1 and 2.

Although the present invention has been described with reference to a specific embodiment, those of skill in the art will recognize that changes may be made thereto without departing from the scope and spirit of the invention as set forth in the appended claims.

The features disclosed in the foregoing description, in the claims and/or in the accompanying drawings may, both separately and in any combination thereof, be material for realising the invention in diverse forms thereof.

## Claims

1. A locking and closure mechanism for a magnetic tape drive comprising:
a housing adapted to receive a cartridge containing a magnetic recording medium;
retaining and ejection means, associated with said housing, for securely retaining said cartridge within said housing and for selectively moving said cartridge to a predetermined position allowing removal of said cartridge from said housing;
a reciprocable release button protruding from said housing;
an actuator linkage pivotally mounted inside said housing, said actuator linkage including an abutment surface engageable with said release button;
a cartridge access opening covered by a selectively pivotable door;
a first arcuate cog surface projecting from, and disposed on, said door;
a door linkage pivotally connected to said housing, said door linkage including a door lock stop and a second arcuate cog surface adapted to mesh operatively with said first arcuate cog surface on said door;
a door lock toggle pivotally connected to said housing, said door lock toggle being actuable to a locked position in which said door lock toggle engages said door stop of said door linkage to prevent opening of said door, and an unlocked position in which said door is free to open; and
door release means, extending from said actuator linkage, for actuating said door lock toggle to said unlocked position.

2. A locking and closure mechanism for a magnetic tape drive including a housing adapted to receive a cartridge containing a magnetic recording medium, said locking and closure mechanism comprising:
retaining and ejection means, associated with said housing, for securely retaining said cartridge within said housing and for selectively moving said cartridge to a predetermined position allowing removal of said cartridge from said housing; and
detent means for maintaining said cartridge in said predetermined position and for conducting static electricity from said cartridge, said detent means being connected to said housing and to ground.

3. A locking and closure mechanism according to claim 2, wherein said detent means comprises a metallic leaf spring having a first end secured to said housing, and a second end including a protrusion biased towards engagement with a notch in said cartridge when said cartridge is in said predetermined position.

4. A locking and closure mechanism according to claim 2, wherein said retaining and ejection means comprises:
a guide rail secured to said housing;
a slide member secured on said rail for reciprocal movement along said rail, said slide member including a contact surface adapted to engage said cartridge and also including a locking cam projection;
resilient means, connected to said slide member, for basing said slide member towards said cartridge;
a locking arm pivotally secured to said housing, said locking arm including a first end having a cam surface and a locking surface capable of selective engagement with said locking cam projection of said slide member, said locking arm also including a second end having an actuator contact surface, said locking arm being pivotable between a first, locking position and a second, release portion;
an over-center spring connected to said locking arm to bias said locking arm into either said first position or said second position; and
a release mechanism disposed on said housing, said release mechanism being selectively actuable, through contact with said actuator contact surface of said locking arm, to overcome the bias of said over-center spring to pivot said locking arm to said release portion.

5. A locking and closure mechanism according to claim 4, wherein said release mechanism comprises:
a reciprocable release button protruding from said housing; and
an actuator linkage pivotally mounted inside said housing, said actuator linkage including a first abutment surface engageable with said release button, and a second abutment surface engageable with said contact surface of said locking arm.

6. A locking and closure mechanism according to claim 5, wherein said release mechanism further comprises means for resiliently basing said actuator linkage into engagement with said release button.

7. A locking and closure mechanism according to claim 5, wherein said housing comprises a cartridge access opening covered by a selectively pivotable door.

8. A locking and closure mechanism according to claim 7, wherein said release mechanism further comprises:
a first arcuate cog surface projecting from, and disposed on, said door;
a door linkage pivotally connected to said housing, said door linkage including a door lock stop and a second arcuate cog surface adapted to mesh operatively with said first arcuate cog surface on said door;
a door lock toggle pivotally connected to said housing, said door lock toggle being actuable to a locked position in which said door lock toggle engages said door stop of said door linkage to prevent opening of said door, and an unlocked position in which said door is free to open; and
door release means, extending from said actuator linkage, for actuating said door lock toggle to said unlocked position.

9. A locking and closure mechanism according to claim 8, wherein said release mechanism further comprises:
first spring means, connected to door linkage, for basing said door towards open position and for basing said actuator linkage to a neutral position; and
second spring means, connected to said door lock toggle, for biasing said door lock toggle towards said door linkage.

10. A locking and closure mechanism according to claim 4, further comprising:
a roller lever mounted on said housing, said roller lever being movable into contact with a bottom surface of said cartridge; and
a roller lever actuator extending from said locking arm, said roller lever actuator being adapted and positioned to move said roller lever.

11. A locking and closure mechanism according to claim 10, wherein said roller lever comprises:
a generally Y-shaped lever including a pair of angularly offset arms, each of said offset arms terminating in a respective free end; and
a pair of roller members disposed respectively on each free end of each of said arms.

12. A locking and closure mechanism for a magnetic tape drive comprising:
a housing adapted to receive a cartridge containing a magnetic recording medium;
a release mechanism disposed on said housing, said release mechanism being selectively actuable to permit movement of said cartridge to a predetermined position allowing removal of said cartridge from said housing; and
a metallic leaf spring having a first end secured to said housing, and a second end including a protrusion engageable with a notch in said cartridge, said second end of said spring being biased towards engagement with said notch in said cartridge when said cartridge is in said predetermined position.
